# EUROPÄISCHE PATENTSCHRIFT

(11) **EP 3 399 183 B1**
(45) Veröffentlichungstag und Bekanntmachung des Hinweises auf die Patenterteilung: **13.11.2019**
(21) Anmeldenummer: 18170371.1
(22) Anmeldetag: 02.05.2018
(51) Int. Cl.: F03D 1/06

(54) **ROTORBLATT EINER WINDENERGIEANLAGE**
ROTOR BLADE OF A WIND TURBINE
PALE DE ROTOR D'UNE ÉOLIENNE

(30) Priorität: 04.05.2017 DE 102017004288
(43) Veröffentlichungstag der Anmeldung: 07.11.2018
(73) Patentinhaber: Senvion GmbH, 22297 Hamburg (DE)
(72) Erfinder: Klemme, Thomas, 24106 Kiel (DE); Korjahn, Matthias, 24768 Rendsburg (DE); Erbslöh, Sascha, 22419 Hamburg (DE)
(74) Vertreter: Hahner, Ralph

(56) Entgegenhaltungen:
- DE-B4-102011 012 965
- DE-U1-202016 101 461
- US-A1- 2012 269 640
- US-A1- 2014 003 957
- US-B1- 8 419 373

## Beschreibung

Die Erfindung betrifft ein Rotorblatt einer Windenergieanlage, welches sich in einer Längsrichtung zwischen einer Blattwurzel und einer Blattspitze erstreckt und außerdem eine Saugseite, eine Druckseite, eine Vorderkante und eine Hinterkante umfasst, wobei das Rotorblatt in einem Blattwurzelbereich ein stumpfes Profil mit einer aufgedickten Hinterkante aufweist und die Hinterkante eine sich im Blattwurzelbereich erstreckende Hinterkantenfläche umfasst. Außerdem betrifft die Erfindung eine Windenergieanlage mit einem solchen Rotorblatt.

Rotorblätter von Windenergieanlagen sind allgemein bekannt. Ein Rotorblatt mit einer aufgedickten Hinterkante, also einem im Blattwurzelbereich stumpfen Profil, ist beispielsweise aus der WO 2015/062710 A1 bekannt. Dieses Rotorblatt umfasst auf der Saugseite Vortexgeneratoren. Außerdem ist eine sog. Strömungsabrissinduktionsvorrichtung vorgesehen, die sich beispielsweise an der druckseitigen Hinterkante im Blattwurzelbereich, also im stumpfen Teil des Rotorblattprofils, befindet. Ein weiteres Rotorblatt für eine Windenergieanlage ist aus US 2014/003957 A1 bekannt.

Um die Rotorleistung zu maximieren ist es wünschenswert, wenn ein Rotorblatt auch im Rotorblattwurzelbereich einen möglichst hohen Auftriebsbeiwert hat. Dies ist jedoch limitiert durch den zu überwindenden positiven Druckgradienten auf der Saugseite des Rotorblatts. Die Grenzschicht ist in diesem Bereich bereits durch die zuvor genannten Vortexgeneratoren und beispielsweise ein Tab an der Hinterkante, also eine Strömungsabrisskante auf der Druckseite, unterstützt. Eine weitere Erhöhung des Auftriebs des Rotorblatts im Rotorblattwurzelbereich scheint mit diesen bekannten Maßnahmen nicht möglich.

Es ist eine Aufgabe der Erfindung, ein Rotorblatt sowie eine Windenergieanlage mit einem solchen Rotorblatt anzugeben, wobei der Auftriebsbeiwert des Rotorblatts im Rotorblattwurzelbereich erhöht sein soll.

Die Aufgabe wird gelöst durch ein Rotorblatt einer Windenergieanlage, welches sich in einer Längsrichtung zwischen einer Blattwurzel und einer Blattspitze erstreckt und außerdem eine Saugseite, eine Druckseite, eine Vorderkante und eine Hinterkante umfasst, wobei das Rotorblatt in einem Blattwurzel nahen Übergangsbereich ein stumpfes Profil mit einer aufgedickten Hinterkante aufweist und eine sich im Übergangsbereich erstreckende Hinterkantenfläche umfasst, wobei das Rotorblatt dadurch fortgebildet ist, dass auf der Hinterkantenfläche zumindest ein Luftleitelement vorhanden ist, wobei das Luftleitelement dazu eingerichtet ist, wenn es im Betrieb der Windenergieanlage von einer zumindest näherungsweise in Längsrichtung des Rotorblatts entlang der Hinterkantenfläche strömenden Radialströmung angeströmt wird, einen Auftrieb in Richtung der Saugseite des Rotorblatts zu erzeugen.

Es wurde erkannt, dass eine bei Rotorblättern im Betrieb auftretende radiale Strömung entlang der Hinterkantenfläche im Blattwurzelbereich bei Rotorblättern mit stumpfen Rotorblattprofilen bislang ungenutzt bleibt, also für die Auftriebsgenerierung keine Rolle spielt. Da die Geschwindigkeit der in radialer Richtung entlang der Hinterkante strömenden Luft mit zunehmendem Abstand von der Rotorblattwurzel zunimmt, nimmt der absolute Druck an der Hinterkante des Rotorblatts in Richtung der Rotorblattspitze ab. Dieser Druckgradient entwickelt eine Sogwirkung entlang der Hinterkante des Rotorblatts. Die durch diesen Sog bedingte Luftströmung ist zumindest näherungsweise in Längsrichtung des Rotorblatts orientiert, wobei die Richtung der Strömung mit zunehmendem Abstand von der Blattwurzel mehr und mehr parallel zur Längsrichtung orientiert ist.

Diese in Längsrichtung des Rotorblatts gerichtete Strömung kann genutzt werden, um einen 3D-Effekt zu erzeugen. Dieser ist in der Lage den Auftriebsbeiwert des Rotorblatts im Rotorblattwurzelbereich zu erhöhen. Vorteilhaft sind diese Maßnahmen mit bekannten Maßnahmen zur Maximierung des Auftriebsbeiwerts kombinierbar. Beispielsweise kann das zumindest eine auf der Hinterkantenfläche vorhandene Luftleitelement mit Vortexgeneratoren und/oder einem Hinterkantentab (Strömungsabrisskante auf der Druckseite) kombiniert werden.

Insbesondere ist vorgesehen, dass das zumindest eine Luftleitelement sich aus der Hinterkantenfläche erhebt und eine Luftabweisfläche umfasst, die mit einer senkrecht auf einer Profilebene stehenden Hilfsebene, in der eine Pitchachse des Rotorblatts liegt, einen endlich großen Winkel einschließt, wobei die Luftabweisfläche um einen in der Hilfsebene liegenden Winkelursprung in Richtung der Druckseite des Rotorblatts aus der Hilfsebene herausgedreht ist.

Das Luftleitelement wirkt als Luftabweiser, der die strömende Luft in Richtung der Druckseite des Rotorblatts ablenkt und so einen Schub auf das Rotorblatt ausübt.

Gemäß einer weiteren vorteilhaften Ausführungsform ist das Rotorblatt dadurch fortgebildet, dass das zumindest eine Luftleitelement ein länglicher Körper ist, der sich in einer Längserstreckungsrichtung zwischen einem ersten Ende und einem zweiten Ende erstreckt, wobei das Luftleitelement mit seinem ersten Ende an der Hinterkantenfläche befestigt ist und das zweite Ende des Luftleitelements ein freies Ende ist, welches von der Hinterkantenfläche absteht.

Insbesondere ist vorgesehen, dass das Luftleitelement in einem Querschnitt senkrecht zu seiner Längserstreckungsrichtung ein Profil aufweist, welches angeströmt von einer in Längsrichtung des Rotorblatts entlang der Hinterkantenfläche strömenden Radialströmung eine Auftriebskraft in Richtung der Saugseite des Rotorblatts erzeugt.

Ein Luftleitelement gemäß dieser Ausführungsform ist besonders vorteilhaft, da es den Luftwiederstand des rotierenden Rotorblatts nicht oder nur in vernachlässigbarem Umfang erhöht. Dies ist der Fall, da seine größte Ausdehnung im Wesentlich in Rotationsrichtung des Rotorblatts gerichtet ist.

Ferner ist insbesondere vorgesehen, dass das zumindest eine Luftleitelement dreieckig oder bügelförmig ist.

Die Aufgabe wird außerdem gelöst durch eine Windenergieanlage mit einem Rotorblatt nach einem oder mehreren der zuvor genannten Aspekte.

Auf die Windenergieanlage treffen gleiche oder ähnliche Vorteile zu, wie sie bereits im Hinblick auf das Rotorblatt selbst erwähnt wurden.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in schematisch vereinfachter Darstellung von der Vorderseite her,
- Fig. 2: ein Rotorblatt gemäß dem Stand der Technik in einer schematisch vereinfachten perspektivischen Darstellung,
- Fig. 3 bis 5: jeweils eine schematisch vereinfachte perspektivische Darstellung eines abschnittsweise dargestellten Rotorblatts gemäß verschiedener Ausführungsbeispiele.

In den Zeichnungen sind jeweils gleiche oder gleichartige Elemente und/oder Teile mit denselben Bezugsziffern versehen, so dass von einer erneuten Vorstellung jeweils abgesehen wird.

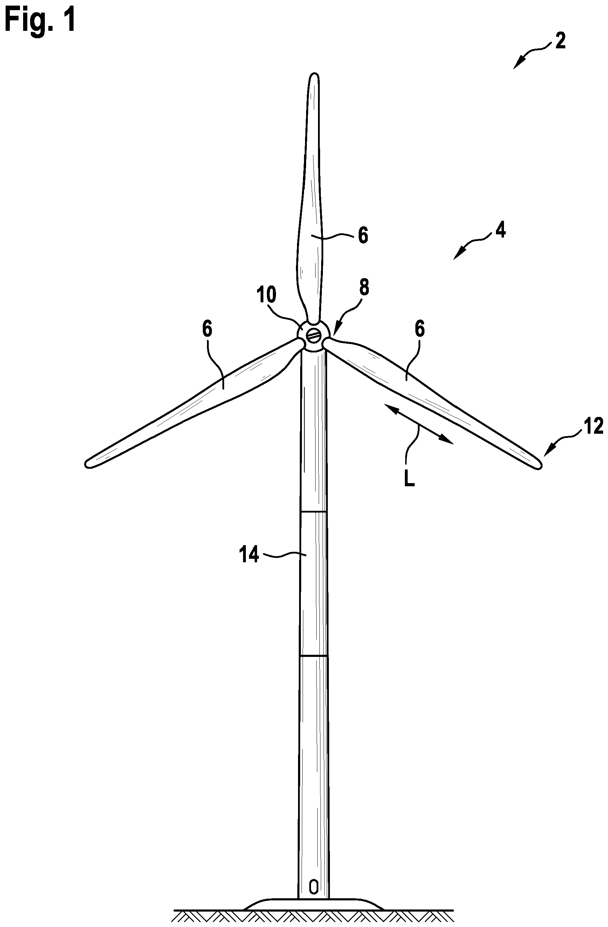

Fig. 1 zeigt eine Windenergieanlage 2 in einer schematisch vereinfachten Frontalansicht. Die Anlage umfasst einen Rotor 4, dessen drei Rotorblätter 6 an ihrer Blattwurzel 8 mit einer Rotornabe 10 gekoppelt sind und sich in einer Längsrichtung L zwischen der Blattwurzel 8 und einer Blattspitze 12 erstrecken. Der Rotor 4 der dargestellten Windenergieanlage 2 umfasst beispielhaft drei Rotorblätter 6.

Die Windenergieanlage 2 umfasst weiterhin ein Maschinenhaus, welches die weiteren Komponenten der Windenergieanlage 2, insbesondere deren Hauptwelle, an welcher die Rotornabe 10 befestigt ist, deren Getriebe, Generator, Steuerung usw. beherbergt. In Fig. 1 ist das Maschinenhaus nicht sichtbar. Es ist von einer Tragstruktur 14, welche lediglich beispielhaft auf Land gegründet ist, getragen. Die Windenergieanlage 2 kann ebenso auf dem Grund eines Gewässers gegründet sein (Offshore Anlage). Die Tragstruktur 14 ist beispielsweise ein Rohrturm.

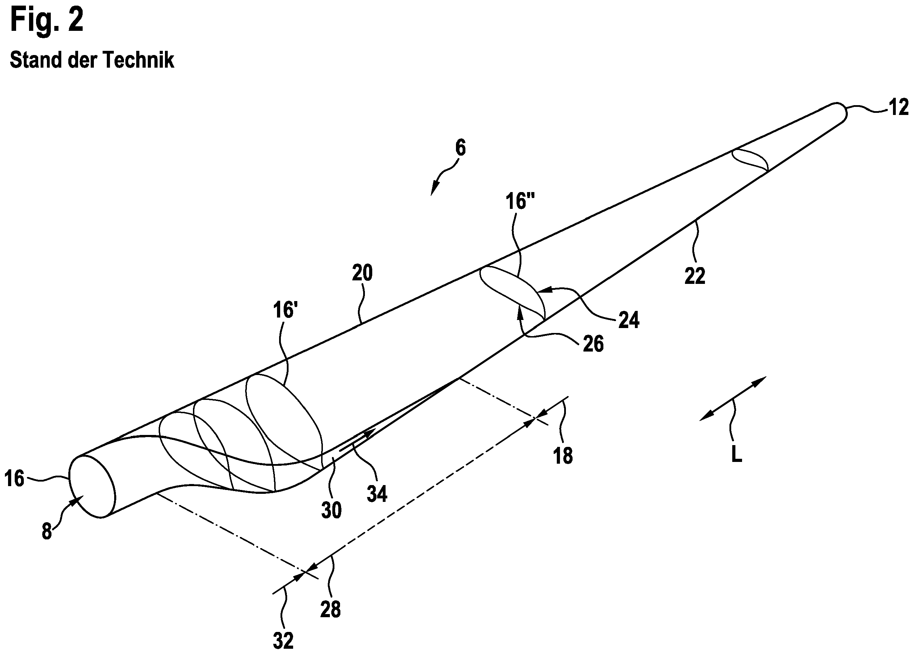

Fig. 2 zeigt in einer schematisch vereinfachten perspektivischen Darstellung ein Rotorblatt 6 gemäß dem Stand der Technik. Das Rotorblatt 6 hat an seiner Blattwurzel 8 ein kreisrundes Querschnittsprofil 16 und erstreckt sich in der Längsrichtung L. Das Profil des Rotorblatts 6 weist in Längsrichtung L eine Vielzahl unterschiedlicher aerodynamischer Querschnittsprofile auf. Beginnend mit einem runden Querschnittsprofil 16 an der Blattwurzel 8 ändert sich das Profil in ein Querschnittsprofil 16' mit stumpfer Hinterkante in einem Blattwurzelbereich bis zu Querschnittsprofilen 16" mit spitz zulaufender Profilhinterkante in einem mittleren Bereich bzw. im Bereich der Blattspitze 12. Es sind die jeweiligen Querschnittsformen der aerodynamischen Querschnittsprofile 16, 16', 16" dargestellt.

In einem mittleren Bereich, dem sog. Vollprofilbereich 18, ist ein aerodynamisches Querschnittsprofil 16" in Form eines Vollprofils eingezeichnet. Dieses erstreckt sich von einer Vorderkante 20 bis zu einer Hinterkante 22 entlang einer Saugseite 24 und entlang einer Druckseite 26 des Rotorblatts 6. In einem wurzelnahen Übergangsbereich 28 ist die Hinterkante 22 des Rotorblatts 6 abgeschnitten und geht in eine Hinterkantenfläche 30 über. Die Hinterkantenfläche 30 verbreitert sich von der Blattspitze 12 in Richtung der Blattwurzel 8, bis das Profil des Rotorblatts 6 schließlich in einen runden Querschnitt bzw. ein rundes Querschnittsprofil 16 übergeht. Dieser Bereich soll als zylindrischer Bereich 32 bezeichnet werden. In dem Übergangsbereich 28, in dem das Rotorblatt 6 eine stumpfe Hinterkante aufweist, ist ein stumpfes aerodynamisches Querschnittsprofil 16' gezeigt. Dieses Profil hat eine größere relative Dicke als das aerodynamische Querschnittsprofil 16" im Vollprofilbereich 18. Dabei wird die relative Dicke als das Verhältnis von Profildicke zu Sehnenlänge zwischen Vorderkante 20 und Hinterkante 22 definiert.

Im Betrieb der Windenergieanlage 2 entwickelt sich entlang der Hinterkantenfläche 30 eine Radialströmung 34, die bei Rotorblättern 6 gemäß dem Stand der Technik ungenutzt bleibt.

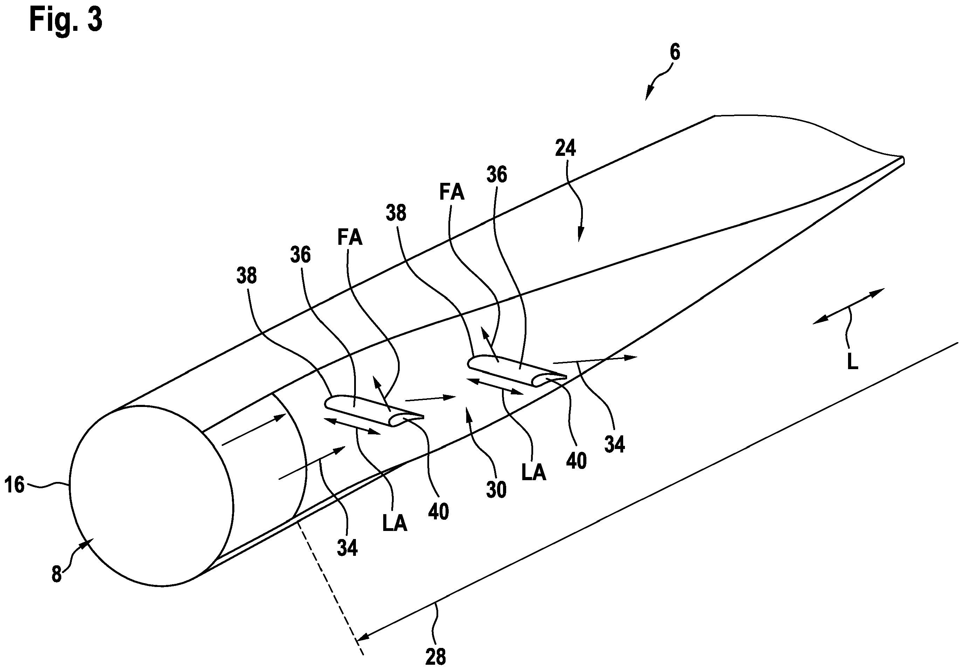

Fig. 3 zeigt abschnittsweise ein schematisches, vereinfacht und perspektiv dargestelltes Rotorblatt 6 gemäß einem Ausführungsbeispiel.

Die Radialströmung 34 ist durch Pfeile angedeutet, von denen aus Gründen der Übersichtlichkeit nur einige mit Bezugszeichen versehen sind. Auf der Hinterkantenfläche 30 des Rotorblatts 6 befinden sich beispielhaft zwei Luftleitelemente 36. Minimal ist ein Luftleitelement 36 vorgesehen. Die maximale Anzahl ist nicht vorgegeben, findet aber ihre natürliche Begrenzung dann, wenn die einzelnen Luftleitelemente 36 nicht mehr frei angeströmt werden.

Die Luftleitelemente 36 sind dazu eingerichtet, wenn sie im Betrieb der Windenergieanlage 2 von der zumindest näherungsweise in Längsrichtung L des Rotorblatts 6 entlang der Hinterkantenfläche 30 strömende Radialströmung 34 angeströmt werden, einen Auftrieb in Richtung der Saugseite 24 des Rotorblatts 6 zu erzeugen. Mit anderen Worten liefern die Luftleitelemente 36 also zusätzlichen Auftrieb.

Die in Fig. 3 dargestellten Luftleitelemente 36 erheben sich aus der Hinterkantenfläche 30 und haben die Form länglicher Körper mit einer Längserstreckungsrichtung LA zwischen einem ersten Ende 38 und einem gegenüberliegenden zweiten Ende 40. Das Luftleitelement 36 ist mit seinem ersten Ende 38 an der Hinterkantenfläche 30 befestigt. Das zweite Ende 40 des Luftleitelements 36 ist ein freies Ende, welches von der Hinterkantenfläche 30 absteht.

Die beispielhaft in Fig. 3 gezeigten Luftleitelemente 36 haben einen Querschnitt, der senkrecht zur Längserstreckungsrichtung LA der Luftleitelemente 36 ein aerodynamisches Profil aufweist, welches, angeströmt von der in Längsrichtung L des Rotorblatts 6 entlang der Hinterkantenfläche 30 strömenden Radialströmung 34, eine Auftriebskraft FA in Richtung der Saugseite 24 des Rotorblatts 6 erzeugt. Die Luftleitelemente 36 sind also mit anderen Worten ähnlich einem Flügel ausgestaltet, dessen Saugseite in Richtung der Saugseite 24 des Rotorblatts gewandt ist.

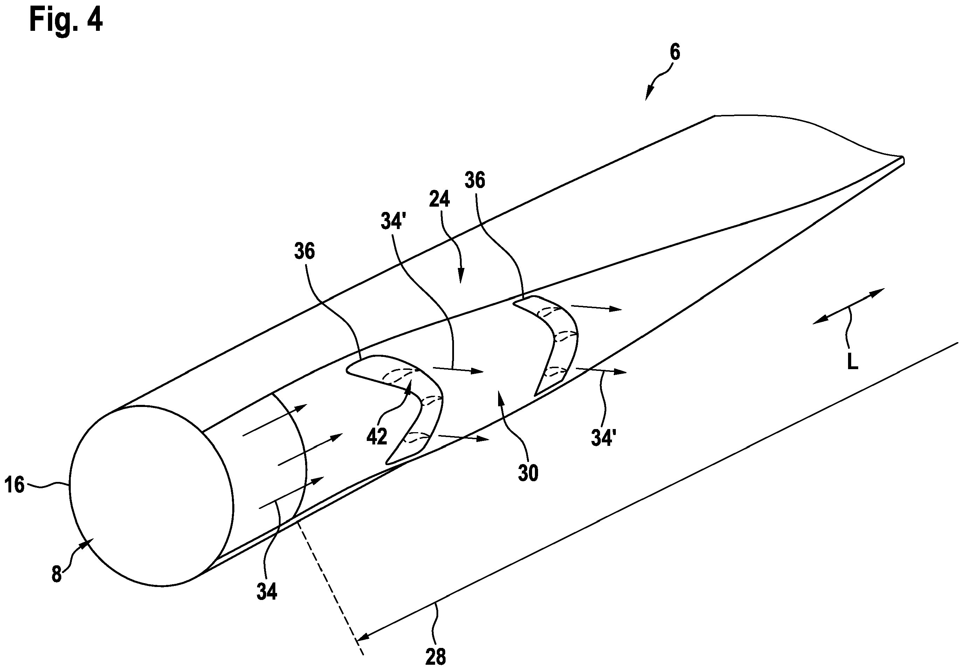

Fig. 4 zeigt ein weiteres Rotorblatt 6 in abschnittsweiser Darstellung. Die entlang der Hinterkantenfläche 30 strömende Radialströmung 34 wird von den auf der Hinterkantenfläche 30 vorhandenen Luftleitelementen 36 in Richtung der in der Figur unten liegenden Druckseite des Rotorblatts 6 abgelenkt. Die abgelenkte Radialströmung ist mit Bezugszeichen 34' bezeichnet. Die Luftleitelemente 36 sind bügelförmig ausgestaltet.

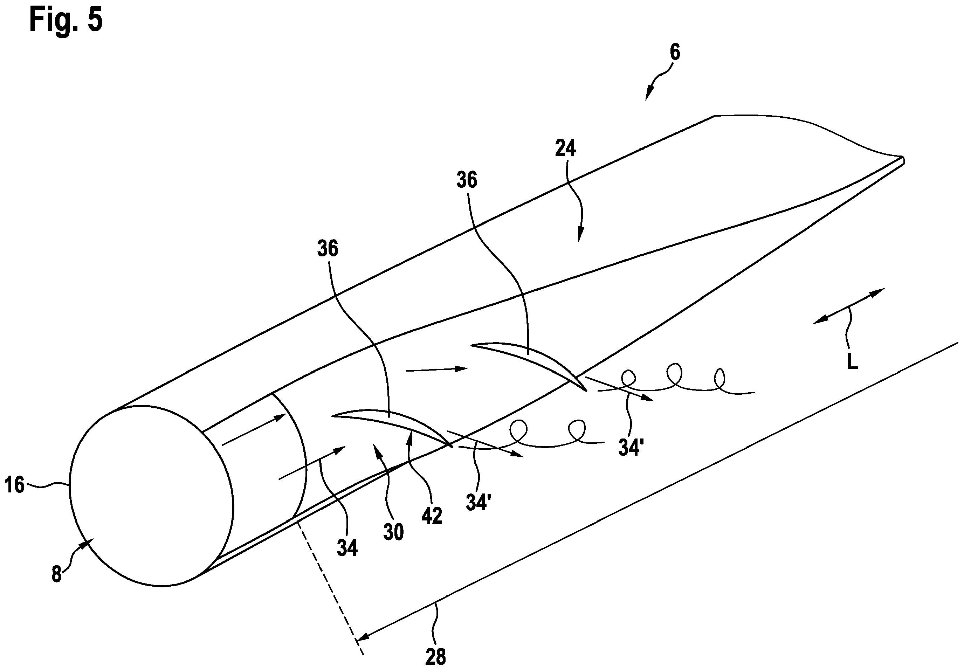

Fig. 5 zeigt ein weiteres Rotorblatt 6 gemäß einem Ausführungsbeispiel in schematischer perspektivischer Darstellung. Erneut ist das Rotorblatt 6 abschnittsweise dargestellt. Auf der Hinterkantenfläche 30 sind Luftleitelemente 36 vorhanden, welche ähnlich den Luftleitelementen bei dem in Fig. 4 dargestellten Rotorblatt 6 die Radialströmung 34 in Richtung einer in Fig. 5 unten liegenden Druckseite des Rotorblatts 6 ablenken. Erneut ist die abgelenkte Radialströmung mit Bezugszeichen 34' versehen. Die Luftleitelemente 36 sind dreieckig.

Den Luftleitelementen 36, wie sie in den Fig. 4 und 5 gezeigt sind, ist gemeinsam, dass diese jeweils eine Luftabweisfläche 42 umfassen. Bei den bügelförmigen Luftleitelementen 36 in Fig. 4 ist diese in dem in der Figur oben liegenden Bereich und bei den in Fig. 5 gezeigten Luftleitelementen 36 auf deren Unterseite angeordnet.

Die Luftabweisfläche 42 schließt mit einer senkrecht auf einer Profilebene, die einem Querschnittsprofil 16, 16' 16" entspricht, stehenden Hilfsebene, in der eine Pitchachse (Rotationsachse beim Verstellen des Rotorblattwinkels/Pitchwinkels) des Rotorblatts 6 liegt, einen endlich großen Winkel ein. Vereinfacht beschrieben ist also die Luftabweisfläche 42 gegenüber der Pitchachse geneigt. Dabei ist die Luftabweisfläche 42 um einen in dieser Hilfsebene liegenden Winkelursprung in Richtung der Druckseite 26 des Rotorblatts 6 aus der Hilfsebene herausgedreht. So wird bewirkt, dass die abgelenkte Radialströmung 34' in Richtung der Druckseite des Rotorblatts 6 abgelenkt wird.

Die Luftleitelemente 36, welche an der Hinterkantenfläche 30 eines Rotorblatts 6 vorgesehen sind, erhöhen den Auftrieb des Rotorblatts 6 im Übergangsbereich 28. Eine bei bisherigen Rotorblättern 6 ungenutzte Radialströmung 34 wird vorteilhaft zur Auftriebserzeugung genutzt. Dies erhöht die Wirtschaftlichkeit der Rotorblätter 6 sowie der Windenergieanlage 2, an der diese eingesetzt werden.

Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Rotor
- 6: Rotorblatt
- 8: Blattwurzel
- 10: Rotornabe
- 12: Blattspitze
- 14: Tragstruktur
- 16, 16', 16": Querschnittsprofile
- 18: Vollprofilbereich
- 20: Vorderkante
- 22: Hinterkante
- 24: Saugseite
- 26: Druckseite
- 28: Übergangsbereich
- 30: Hinterkantenfläche
- 32: zylindrischer Bereich
- 34: Radialströmung
- 34': abgelenkte Radialströmung
- 36: Luftleitelement
- 38: erstes Ende
- 40: zweites Ende
- 42: Luftabweisfläche

- L: Längsrichtung
- LA: Längserstreckungsrichtung
- FA: Auftriebskraft

## Patentansprüche

1. Rotorblatt (6) einer Windenergieanlage (2), welches sich in einer Längsrichtung (L) zwischen einer Blattwurzel (8) und einer Blattspitze (12) erstreckt und eine Saugseite (24), eine Druckseite (26), eine Vorderkante (20) und eine Hinterkante (22) umfasst, wobei das Rotorblatt (6) in einem der Blattwurzel (8) nahen Übergangsbereich (28) ein stumpfes Profil mit einer aufgedickten Hinterkante aufweist und eine sich im Übergangsbereich (28) erstreckende Hinterkantenfläche (30) umfasst, wobei auf der Hinterkantenfläche (30) zumindest ein Luftleitelement (36) vorhanden ist,
**dadurch gekennzeichnet, dass**
das Luftleitelement (36) dazu eingerichtet ist, wenn es im Betrieb der Windenergieanlage (2) von einer zumindest näherungsweise in Längsrichtung (L) des Rotorblatts (6) entlang der Hinterkantenfläche (30) strömenden Radialströmung (34) angeströmt wird, einen Auftrieb in Richtung der Saugseite (24) des Rotorblatts (6) zu erzeugen.

2. Rotorblatt (6) nach Anspruch 1, **dadurch gekennzeichnet, dass** das zumindest eine Luftleitelement (36) sich aus der Hinterkantenfläche (30) erhebt und eine Luftabweisfläche (42) umfasst, die mit einer senkrecht auf einer Profilebene (16, 16', 16") stehenden Hilfsebene, in der eine Pitchachse des Rotorblatts (6) liegt, einen endlich großen Winkel einschließt, wobei die Luftabweisfläche (42) um einen in der Hilfsebene liegenden Winkelursprung in Richtung der Druckseite (26) des Rotorblatts (6) aus der Hilfsebene herausgedreht ist.

3. Rotorblatt (6) nach einem der Ansprüche 1 oder 2, **dadurch gekennzeichnet, dass** das zumindest eine Luftleitelement (36) ein länglicher Körper ist, der sich in einer Längserstreckungsrichtung (LA) zwischen einem ersten Ende (38) und einem zweiten Ende (40) erstreckt, wobei das Luftleitelement (36) mit seinem ersten Ende (38) an der Hinterkantenfläche (30) befestigt ist und das zweite Ende (40) des Luftleitelements (36) ein freies Ende ist, welches von der Hinterkantenfläche (30) absteht.

4. Rotorblatt (6) nach Anspruch 3, **dadurch gekennzeichnet, dass** das Luftleitelement (36) in einem Querschnitt senkrecht zu seiner Längserstreckungsrichtung (LA) ein Profil aufweist, welches angeströmt von einer in Längsrichtung (L) des Rotorblatts (6) entlang der Hinterkantenfläche (30) strömenden Radialströmung (34) eine Auftriebskraft (FA) in Richtung der Saugseite (24) des Rotorblatts (6) erzeugt.

5. Rotorblatt (6) nach einem der Ansprüche 1 bis 4, **dadurch gekennzeichnet, dass** das zumindest eine Luftleitelement (36) dreieckig oder bügelförmig ist.

6. Windenergieanlage (2) mit einem Rotorblatt (6) nach einem der Ansprüche 1 bis 5.

## Claims

1. A rotor blade (6) of a wind energy installation (2) which rotor blade (6) extends in a longitudinal direction (L) between a blade root (8) and a blade tip (12) and comprises a suction side (24), a pressure side (26), a leading edge (20) and a trailing edge (22), wherein the rotor blade (6) has, in a transition region (28) close to the blade root (8), a blunt profile with an enlarged trailing edge and comprises a trailing edge surface (30) extending in the transition region (28), wherein at least one air guide element (36) is present on the trailing edge surface (30),
**characterised in that**
the air guide element (36) is arranged to generate a lift in the direction of the suction side (24) of the rotor blade (6) when, while the wind energy installation (2) is in operation, it is approached by a radial flow (34) flowing at least approximately in the longitudinal direction (L) of the rotor blade (6) along the trailing edge surface (30).

2. The rotor blade (6) according to claim 1, **characterised in that** the at least one air guide element (36) rises from the trailing edge surface (30) and comprises an air deflecting surface (42) which includes a finite angle with an auxiliary plane which is perpendicular to a profile plane (16, 16', 16"), in which auxiliary plane a pitch axis of the rotor blade (6) lies, wherein the air deflecting surface (42) is rotated out of the auxiliary plane, in the direction of the pressure side (26) of the rotor blade (6), about an angular origin lying in the auxiliary plane.

3. A rotor blade (6) according to any one of the claims 1 or 2, **characterised in that** the at least one air guide element (36) is an elongate body which extends in a direction of its longitudinal extent (LA) between a first end (38) and a second end (40), wherein the air guide element (36) is attached at its first end (38) to the trailing edge surface (30) and the second end (40) of the air guide element (36) is a free end which projects from said trailing edge surface (30).

4. The rotor blade (6) according to claim 3, **characterised in that** the air guide element (36) has a profile in a cross-section perpendicular to the direction of its longitudinal extent (LA), which profile, when approached by a radial flow (34) flowing in the longitudinal direction (L) of the rotor blade (6) along the trailing edge surface (30), generates an uplift force (FA) in the direction of the suction side (24) of the rotor blade (6).

5. The rotor blade (6) according to any one of the claims 1 to 4, **characterised in that** the at least one air guide element (36) is triangular or is shaped in a bow-like manner.

6. A wind energy installation (2) comprising a rotor blade (6) in accordance with any one of the claims 1 to 5.

## Revendications

1. Pale de rotor (6) d'une éolienne (2), laquelle s'étend dans un sens longitudinal (L) entre un pied de pale (8) et une pointe de pale (12) et comprend un côté d'aspiration (24), un côté de pression (26), un bord d'attaque (20) et un bord de fuite (22), dans laquelle la pale de rotor (6) présente, dans une zone de transition (28) proche du pied de pale (8), un profil émoussé avec un bord de fuite épaissi et comprend une surface de bord de fuite (30) s'étendant dans la zone de transition (28), dans laquelle
au moins un élément déflecteur (36) est présent sur la surface de bord de fuite (30),
**caractérisée en ce que**
l'élément déflecteur (36) est mis au point pour générer une portance en direction du côté d'aspiration (24) de la pale de rotor (6) quand il est parcouru, lors du fonctionnement de l'éolienne (2), par un écoulement radial (34) s'écoulant au moins approximativement dans le sens longitudinal (L) de la pale de rotor (6) le long de la surface de bord de fuite (30).

2. Pale de rotor (6) selon la revendication 1, **caractérisée en ce que** l'au moins un élément déflecteur (36) s'élève de la surface de bord de fuite (30) et comprend une surface de déviation d'air (42), qui forme avec un plan auxiliaire perpendiculaire sur un plan de profil (16, 16', 16"), dans lequel se situe un axe de pas variable de la pale de rotor (6), un grand angle fini, dans laquelle la surface de déviation d'air (42) est tournée autour d'un angle d'origine situé dans le plan auxiliaire en direction du côté de pression (26) de la pale de rotor (6) pour sortir hors du plan auxiliaire.

3. Pale de rotor (6) selon l'une quelconque des revendications 1 ou 2, **caractérisée en ce que** l'au moins un élément déflecteur (36) est un corps allongé, qui s'étend dans un sens d'extension longitudinale (LA) entre une première extrémité (38) et une seconde extrémité (40), dans lequel l'élément déflecteur d'air (36) est fixé par sa première extrémité (38) au niveau de la surface de bord de fuite (30) et la seconde extrémité (40) de l'élément déflecteur (36) est une extrémité libre laquelle fait saillie de la surface de bord de fuite (30).

4. Pale de rotor (6) selon la revendication 3, **caractérisée en ce que** l'élément déflecteur (36) présente dans une section transversale de manière perpendiculaire par rapport à son sens d'extension longitudinale (LA) un profil, lequel, parcouru par un écoulement radial (34) s'écoulant dans le sens longitudinal (L) de la pale de rotor (6) le long de la surface de bord de fuite (30), génère une force de portance (FA) en direction du côté d'aspiration (24) de la pale de rotor (6).

5. Pale de rotor (6) selon l'une quelconque des revendications 1 à 4, **caractérisée en ce que** l'au moins un élément déflecteur (36) est de forme triangulaire ou en forme d'arceau.

6. Eolienne (2) avec une pale de rotor (6) selon l'une quelconque des revendications 1 à 5.
